# EUROPEAN PATENT APPLICATION

(11) **EP 4 381 934 A1**
(43) Date of publication of application: **12.06.2024**
(21) Application number: 23214174.7
(22) Date of filing: 05.12.2023
(51) Int. Cl.: A01D 43/10, A01D 82/02

(54) **SYSTEM AND METHOD FOR ADJUSTING ROLLER IN ROTARY HEADER OF A WINDROWER**

(30) Priority: 07.12.2022 US 202218062741
(71) Applicant: Deere & Company, Moline, IL 61265 (US)
(72) Inventor: Somarowthu, Mahesh, Mannheim (DE); Vadnere, Mohan A., Mannheim (DE); Usasz, Mitchell R., Mannheim (DE)
(74) Representative: Stein, Stefan

(57) **Abstract**

One or more techniques and/or systems are disclosed for automatically adjusting conditioning rollers of a windrower implement, such as those used to condition hay and other windrowed crops. Adjustments can be made on the fly to rollers used to condition the crop based on several factors such as the condition of the crop, the density, speed, header conditions, and more. Sensors can be used to detect the crop's and others' conditions, and automatic adjustments can be made, such as the distance between conditioning rollers, and/or the pressure applied by the rollers, to meet a desired crop condition for the windrows.

## Description

### BACKGROUND

In an agricultural setting, crop materials are often cut, conditioned, arranged into windrows, and/or otherwise processed. In some cases, the crop materials may be raked, chopped, and/or baled as well. Certain work vehicles are provided for these activities. Some harvesting work vehicles and attachable equipment, such as conditioning work vehicles and/or windrowing work vehicles, may include implements for cutting, conditioning, and/or arranging the crop material into a windrow as the work vehicle moves across a field. Typically, the configuration of these implements may be changed or adjusted based on the target project/crop/situation. For example, the position of the implements on the work vehicle may be selectively changed, and these implements can also be manually adjustable for desired results in most cases.

### SUMMARY

This Summary is provided to introduce a selection of concepts in a simplified form that are further described below in the Detailed Description. This Summary is not intended to identify key factors or essential features of the claimed subject matter, nor is it intended to be used to limit the scope of the claimed subject matter. that can operably couple wit

One or more techniques and systems are described herein for adjusting conditioning rollers of a windrower implement, such as those used to condition hay and other windrowed crops. For example, crops such as hay are cut and conditioned into a windrow for seasoning (e.g., drying) for later collection. In implementations described herein the rollers used to condition the crop (e.g., crimp the cut crop) can be automatically adjusted based on several factors such as the condition of the crop, the density, speed, header conditions, and more. That is, the distance between conditioning rollers can be adjusted, and/or the pressure applied by the rollers can be adjusted, to meet a desired crop condition for the windrows.

In one implementation of a system for automatically adjusting a conditioner roller assembly on a windrower machine, a sensor array can comprise one or more sensors that collect sensor data indicative of a condition of a target crop in real-time. Further, one or more actuators can be used to adjust a distance between rollers in a roller assembly of a windrower implement on the fly based at least on received adjustment data. Additionally, a control module can be configured to receive the sensor data and transmits the adjustment data. In this implementation, the control module can comprise a computer processor. The control module can further comprise memory that stores instructions configured to, when processed by the computer processor, generate the adjustment data by determining an amount of roller adjustment that results in a predetermined conditioning for the target crop, the determined amount of roller adjustment based at least upon the sensor data.

To the accomplishment of the foregoing and related ends, the following description and annexed drawings set forth certain illustrative aspects and implementations. These are indicative of but a few of the various ways in which one or more aspects may be employed. Other aspects, advantages and novel features of the disclosure will become apparent from the following detailed description when considered in conjunction with the annexed drawings.

### BRIEF DESCRIPTION OF THE DRAWINGS

FIGURE 1 is a component diagram illustrating one implementation of an example vehicle that may implement one or more systems and methods described herein.
FIGURE 2 is a schematic diagram illustrating one implementation of an example systems that can be used to perform roller gap adjustment, as escribed herein.
FIGURES 3A, 3B, 3C, and 3D are component diagram illustrating one example implementation of one or more portions of one or more systems as described herein.
FIGURE 4 is a schematic diagram illustrating one implementation of one or more portions of one or more systems as described herein.
FIGURE 5 is a flow diagram illustrating one example implementation of a method 500 for performing a roller gap adjustment, as described herein.
FIGURE 6 is a schematic diagram of an example computer system that can be used to provide computational functionalities associated with methods and systems described herein.

### DETAILED DESCRIPTION

The claimed subject matter is now described with reference to the drawings, wherein like reference numerals are generally used to refer to like elements throughout. In the following description, for purposes of explanation, numerous specific details are set forth in order to provide a thorough understanding of the claimed subject matter. It may be evident, however, that the claimed subject matter may be practiced without these specific details. In other instances, structures and devices are shown in block diagram form in order to facilitate describing the claimed subject matter.

As described herein, one or more systems and methods can be devised that provide for effectively adjusting a roll gap and/or roll tension, for conditioning rollers in a rotary header for windrowing operations. In one aspect, this adjustment can facilitate crimping operation on a cut crop in order to improve dry down time (e.g., decrease dry-down), while mitigating leaf loss of the target crop, and crop losses that may result from undesirable force applied to the cut crop during conditioning. For example, as described below, windrower machines are used to cut a target crop and create windrows of the resulting cut crop. The windrowing machine typically has a header coupled to the front (e.g., alternately the rear) of the machine. In this example, the header has a conditioner roller assembly, with conditioning rollers, which are used to crimp the cut crop to help it dry down faster.

That is, for example, the cut crop is crimped by the roller assembly, where the crimping action helps break the outer shell of the crop stems. This breakage of the shell facilitates moisture removal (e.g., through evaporation), resulting in a faster dry down of the target crop. In this example, a smaller roll clearance, results in greater crimping, which can result in an improved drying rate. However, a smaller roll clearance can also result in greater leaf loss, which is undesirable. Currently, an operator must pre-set the roll gap and roll tension in a known target position to achieve a known drying rate, with an allowable amount of leaf loss. In this example, the adjustment must be made even during harvesting by the operator based on changing crop size and changing crop conditions.

In one aspect of the innovation described herein, a desired roll gap and/or roll tension can be estimated on-the-fly and applied to the roller assembly based on header load measurements, crop parameters, image data, and other data collected in real-time. As an example, in this aspect, a pressure sensing device coupled with the header motor power line (e.g., hydraulics line) can provide header load measurement of the incoming crop. Further, for example, an image capturing device can capture image data of the conditioned crop after it has been processed by the roller assembly. Additionally, in this example, size distribution data indicative of distribution of crop sizes in the harvested crop can be identified by the captured image data. A feature matching algorithm can be used to extract crop parameters such as size, length, perimeter/diameter of stem, crimping percentage, etc., for example; and a control system can generate control signals to automatically adjust roll gap and/or roll tension in the roller assembly based on the captured and processed data.

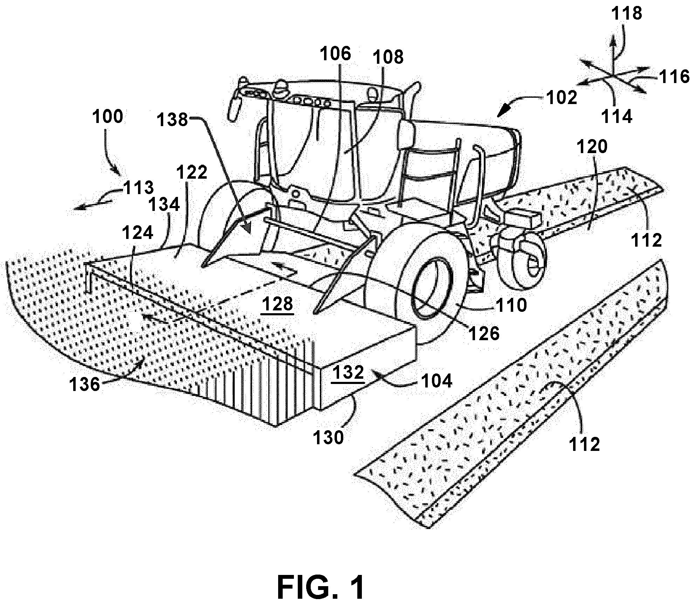

As an illustrative example, FIGURE 1 illustrates a component diagram of an example work vehicle and associated equipment that may utilize the techniques and system described herein. As illustrated in FIGURE 1, a harvesting work vehicle, such as a windrower 100, is illustrated as one example implementations of an embodiment of the present disclosure. In some implementations, the windrower 100 may be a self-propelled machine. However, the systems and methods described herein may be equally applicable to towed machines, or other configurations, as will be appreciated by those having skill in the art. Furthermore, although harvesting work vehicles that mow, condition and windrow crop materials are sometimes interchangeably referred to as mower-conditioners or windrowers, for the sake of simplicity, such machines will be referred to herein as "windrowers." Further, one or more portions of the methods and systems described herein may apply other harvesting work vehicles or to construction and forest harvester vehicles.

Machines that collect and condition crop material, and form a windrow from the same material are discussed according to implementations of the present disclosure; however, it will be appreciated that the present teachings may apply to machines that form windrows without necessarily conditioning the crop material. The present teachings may also apply so to machines that condition (crimp, crush, etc.) crop material without necessarily forming a windrow. Furthermore, the systems and methods of the present disclosure may apply to harvesting of various types of crop materials, such as grasses, alfalfa, or otherwise. Accordingly, it will be appreciated that a wide variety of machines, systems, and methods may fall within the scope of the present disclosure.

In some implementations, the windrower 100 broadly comprises a self-propelled tractor 102 and a header 104 (i.e., header attachment). The header 104 may be attached to the front 138 of the tractor 102. The tractor 102 may include a chassis 106 and an operator compartment 108 supported atop the chassis 106. The operator compartment 108 may provide an enclosure for an operator and for mounting various user control devices (e.g., a steering wheel, accelerator and brake pedals, etc.), communication equipment and other instruments used in the operation of the windrower 100, including a user interface providing visual (or other) user control devices and feedback. The tractor 102 may also include one or more wheels 110 or other traction elements (e.g., tracks) for propelling the tractor 102 and the header 104 across a field or other terrain. The windrower 100 may form a windrow 112 as it moves along a travel direction indicated by the arrow 113.

The windrower 100 may define a coordinate system, such as a Cartesian coordinate system having a longitudinal axis 114, a lateral axis 116, and a vertical axis 118. The longitudinal axis 114 may be substantially parallel to the travel direction 113. The lateral axis 116 may be horizontal and normal to the longitudinal axis 114 to extend between opposing sides of the windrower 100. The vertical axis 118 may extend vertically and normal to the longitudinal axis 114, the lateral axis 116, and the ground 120.

The header 104 may generally include a frame 122, which is mounted to the chassis 106. The frame 122 may be mounted for movement relative to the chassis 106. For example, the frame 122 may move up and down, at least partly, along the vertical axis 118 relative to the chassis 106 and relative to crop material 136. In some implementations, the frame 122 may tilt and rotate about an axis that is parallel to the lateral axis 116. Also, the frame 122 may comprise one or more support elements for supporting implements (e.g., arrangement of implements, etc.).

The frame 122 may generally include a front end 124 and a rear end 126. The rear end 126 may be spaced apart along the longitudinal axis 114 and may be attached to the chassis 106 of the tractor 102. The frame 122 may also include a top structure 128 and a lower area 130, which are spaced apart along the vertical axis 118. Furthermore, the frame 122 may include a first lateral side 132 and a second lateral side 134, which are spaced apart along the lateral axis 116.

In the implementation illustrated in FIGURE 1, and discussed below, the front end 124 is open to receive crop material 136 as the tractor 102 moves across the field. In some implementations, the windrower 100 cuts the crop material 136, then conditions the crop material, and then shapes, places and/or arranges the crop material 136 into the windrow 112 as the tractor 102 moves.

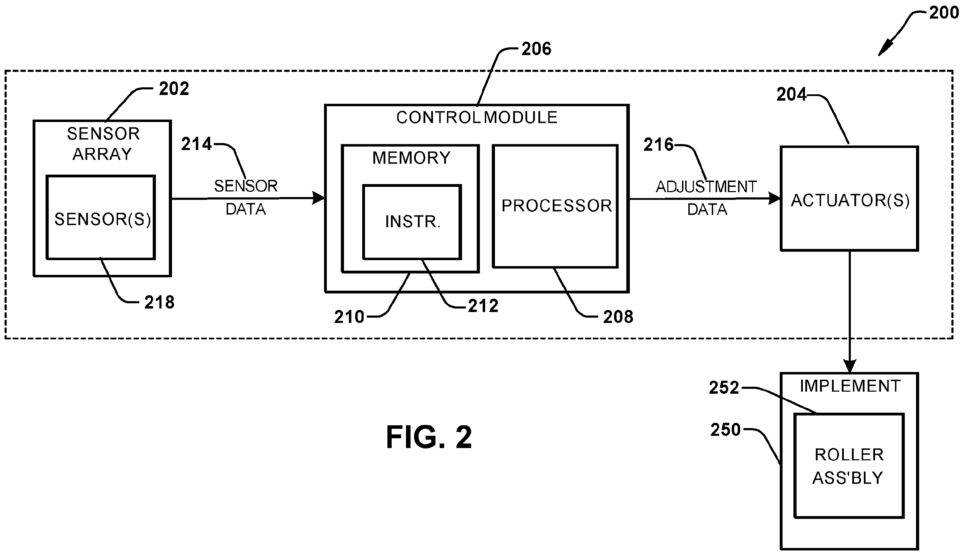

FIGURE 2 is a schematic diagram illustrating one example implementation of a system 200 for improving conditioning of a cut crop during harvesting. In this implementation, the system 200 comprises a sensor array 202 that comprises one or more sensors 218, which collect sensor data 214 indicative of a condition of a target crop (e.g., 136 of FIGURE 1) in real-time. That is, for example, the sensor array 202 can detect the condition of the target crop before it enters the windrower implement (e.g., header 104 of FIGURE 1), while in the windrower implement, and/or when it exits the windrower implement, during operation of the windrower implement (e.g., during harvesting of the crop).

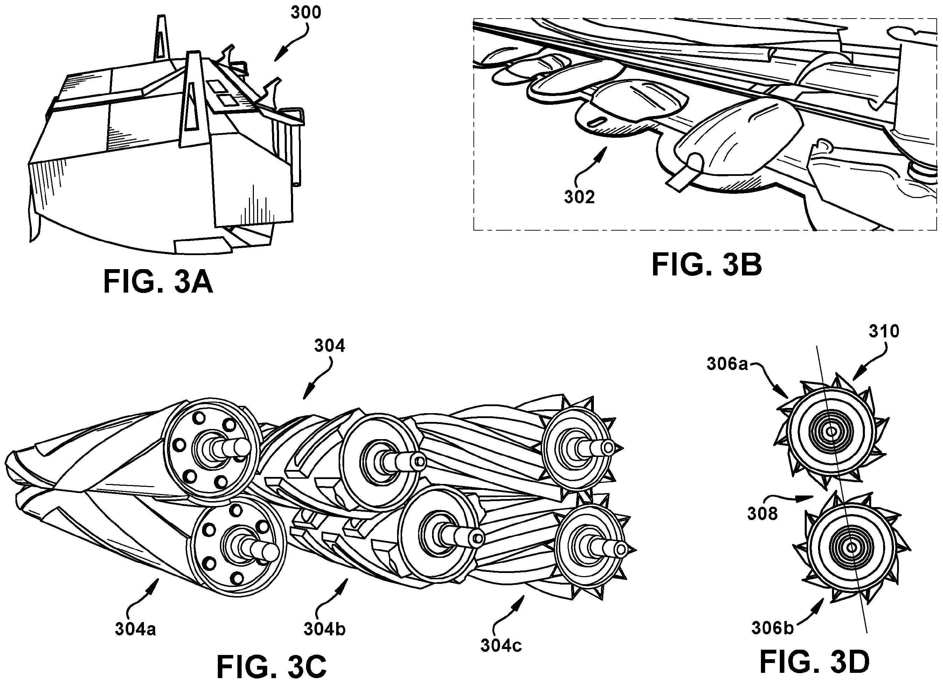

In the example system 200, one or more actuators 204 can be used to adjust a distance between rollers in a roller assembly 252 of a windrower implement 250 on the fly based at least on received adjustment data 216. As an example, in FIGURES 3A, 3B, 3C, and 3D an example windrower implement can comprise a header 300 that is coupled to a vehicle, such as a tractor (e.g., 102 of FIGURE 1). The header 300 comprises a set of cutters 302, such as rotating cutter blades, arranged in the front of the header 300 to cut down the target crop as it enters the header 300. Rearward of the cutters 302 is disposed one or more sets of rollers 304 that are configured to condition the target crop as it is drawn through the header 300 from the front to the rear. That is, for example, a first set of rollers 306a, b can be arranged with a gap 308 therebetween that is configured to allow the target crop to pass between the cutters, while crimping and/or pressure is applied to the crop passing through. Further, rollers 304 can comprise a variety of designs 304a, b, c that can include ridges, treads, or other features in a desired pattern that applies a desired amount or type of crimping, depending on the target crop.

In some implementations a first roller 306a may be configured to translate toward and away from a second roller 306b along an axis of translation 310, while roller 306b remains stationary. In other configurations, roller 306b may be translatable, while roller 306a remains stationary. In other configurations both rollers 306a, 306b may translate along the axis of translation 310. In this way, in this configuration, the gap 308 can be affectively decreased and increased. With continued reference to FIGURE 2, in one example, the adjustment data 216 received by the actuator(s) 204 can result in the actuator(s) 204 increasing or decreasing the gap 308 between the rollers 306a, 306b during operation of the header 300. In this way, the amount and type of conditioning (e.g., crimping) of the target crop can be adjusted during operation (e.g., harvesting), on-the-fly.

Returning to FIGURE 2, the example system 300 comprises a control module 206 that is configured to receive the sensor data 214 and transmits the adjustment data 216. That is, for example the control module 206 receives the sensor data 214 from the sensor array 202, and transmits the adjustment data 216 to the actuator(s). Further, the control module 206 comprises a computer processor 208, that is configured to process data and instructions, and provide resulting data based on the processed data and instructions. Additionally, the control module 206 comprises memory 210 (e.g., computer memory, such as a device or system that is used to store information for use in a computer or related computer hardware and digital electronic devices, including short and long-term memory, temporary and permanent memory, and the like). In this implementation, the memory 210 stores instructions 212 that are configured to, when processed by the computer processor 208, generate the adjustment data 216. The adjustment data 216 is generated by determining an amount of roller adjustment may be needed to result in a predetermined conditioning for the target crop, where the determined amount of roller adjustment is based at least upon the sensor data.

As an example, an operator may determine that a specified amount of conditioning and/or crimping is desired for a target crop, such as based on the type of crop, the crop conditions, the field conditions, type of equipment, and/or the weather conditions (present and future). For example, as described above, and increase in crimping can provide for a decrease in drying time for the target crop, which may be desirable when there is a smaller time window for harvesting (e.g., expected wet condition, expected rain, larger area for harvest, etc.). Further, different crops may have different conditioning requirements, such as those with different stem dimensions, foliage, lengths, and density or volume. Based on this information and more, the operator can select a desired conditioning that will achieve a target drying time while mitigating leaf loss from the crop to an acceptable level. In some implementations, the operator may input the desired drying time and can select the conditioning applied based on the predicted leaf loss (e.g., or vice versa).

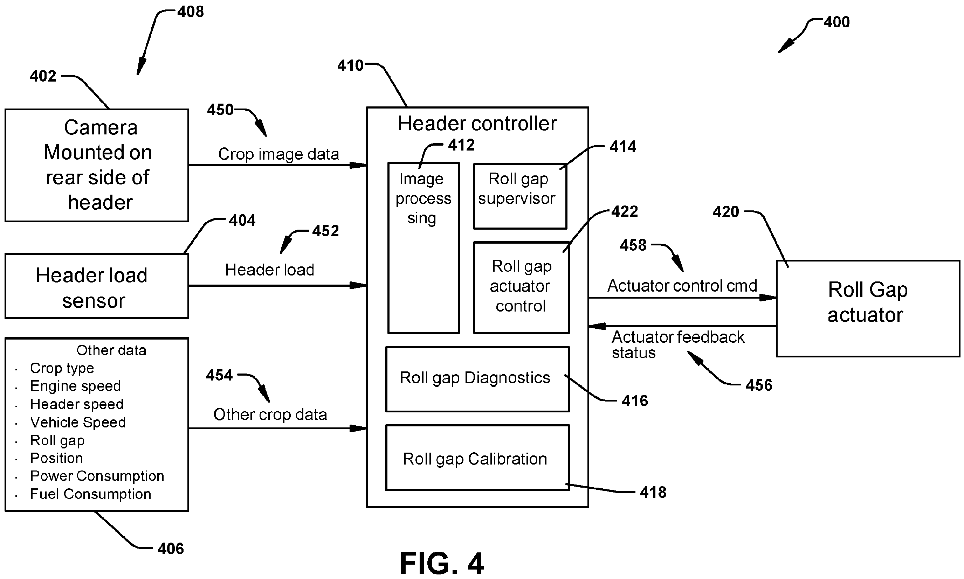

FIGURE 4 is a schematic diagram illustrating another example implementation of a system 400 that utilizes the innovative methods and systems described herein. In this example system 400, an imaging device 402, such as a camera, can be mounted on or proximate the windrowing implement (e.g., header), such at the rear side. As an example, the camera 402 can collect image data 450 of the target crop as it exits the header, and/or as it enters the header. Further, a header load sensor 404 can detect a header load 452, which can indicate an amount of the target crop is entering the header, such as a crop density or crop volume. In this example, the header load 452 can be indicative of an amount of the target crop that is being processed by the header.

Additionally, other data 406 can be collected, such as by a sensor array and/or as input from other components of the harvester and header systems. For example, other data can include the crop type (e.g., auto-detected or input by operator), engine speed of motor providing power to the header, header speed (e.g., over ground, and/or speed of rollers/cutters), vehicle speed (e.g., tractor, harvester), the roll gap between the one or more sets of rollers in the roller assembly of the header, the position of the header/vehicle, the power consumption of the header (e.g., power load) indicative of the load that is being placed on the header, such as by detecting a load (e.g., power load) that is being placed on the motor (e.g., electric, hydraulic, etc.) driving the header, and/or fuel consumption of the vehicle. This other crop data 454 can be used to provide indications of the crop condition and processing effectiveness of the conditioning rollers. As an example, the data can be collected by various sensors, etc., which can form parts of a sensor array 408, which can include the camera 402, the load sensor 404, and other sensors and inputs for collecting the other data 406.

In the example system 400, a header controller 410 (e.g., a controller, control unit, etc., such as control module 206 of FIGURE 2) may comprise a computer processor and memory (e.g., as shown in FIGURE 2), which comprises instructions for performing various functions associated with the collected data. In this implementation, the processor and instructions may use the collected crop image data 450 to perform image processing 412. Image processing can comprise a variety of technologies used to process images for a particular purpose, for example, which may include performing edge detection on image data 450 generated by the sensor array 408 to identify stems and leaves of the target crop (e.g., differentiate portions of the crop). Further, in some implementations, the image processing 412 may be used to identify boundaries of stems and perform feature matching to match with the predetermined conditioning for the target crop. For example, pre-programmed image data may be used to identify known or desired conditions for the target crop after conditioning, where the crop image data 450 collected in real-time can be compared (e.g., matched) with the pre-programmed image data to determine the actual condition of the conditioned crop with respect to a known or desired condition. Additionally, the image processing 412 can be used to perform a multi-layered image classification of images generated from the crop image data 450, based at least on deep convolutional neural network training of a classifier. That is, for example, the classifier can be used to determine the real-time characteristics of the conditioned crop from the crop image data 450.

As illustrated in FIGURE 4, the header load data 452, along with the other crop data 454, and results of the image processing 412 can be combined to determine whether the roll gap needs to be calibrated (e.g., adjusted), for example, to attain a desired conditioning result for the harvested crop. A roll gap supervisor 414 (e.g., comprising instructions stored in memory processed by a processor) can be used to monitor the roll gap in the one or more sets of rollers in the roller assembly of the header. A roll gap diagnostics module 416 (e.g., comprising instructions stored in memory processed by a processor) can receive diagnostics (feedback status data 456) from a roller actuator, and the header itself (e.g., state data indicative of the current condition of the headers, rollers, etc.). A roll gap calibration module 418 (e.g., comprising instructions stored in memory processed by a processor) can be used to process the received data (e.g., from the sensor array) in real-time, in combination with diagnostics data for the header, actuator(s), and roller assembly to identify a potential adjustment for the roller gap (e.g., positive, negative, or zero adjustment). In some implementations, the roll gap calibration module 418 and/or the roll gap supervisor 414 can utilize the sensor data (e.g., processed image data, header load 452, and other crop data 454) from a plurality of sensors in the sensor array in a decision forest regression to identify the adjustment data. That is, a type of voting process can be used to identify or select the data or data sets that can be used to determine the desired adjustment for the roller gap.

In some implementations, the controller 410 can transmit actuator control commands 458 (e.g., using a roll gap actuator control 422, such as comprising programming 212 resident on memory 210 processed by a processor 208) to a roll gap actuator 420, which result in the roll gap actuator adjusting (e.g., or not) the distance of the gap between respective one or more sets of rollers in the roller assembly. For example, which results in an adjustment of the conditioning of the target crop, on-the-fly, during operation.

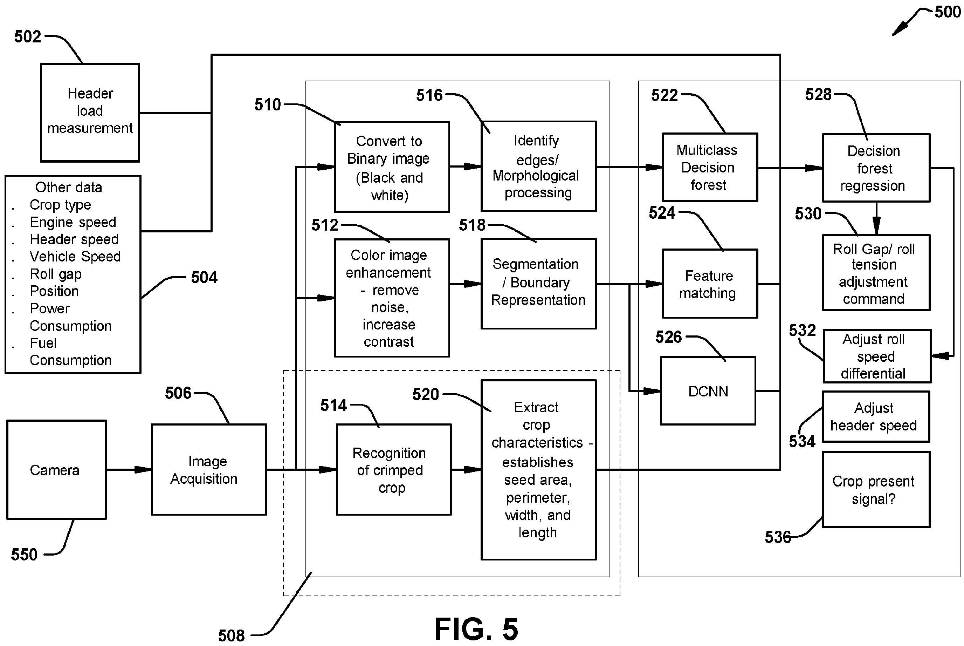

FIGURE 5 is a flow diagram illustrating an example process of operations 500, such as may occur using the system 400 of FIGURE 4. At 502 header load data is collected, such as by a load sensor, including a crop density sensor. At 506, a plurality of other crop data is collected, such as by a sensor array, including inputs and sensors, including, but not limited to, the crop type, engine speed (e.g., vehicle and/or header motor), header speed (e.g., over the ground), vehicle speed (e.g., over the ground), roll gap (e.g., for one or more sets of rollers), position of header and/or vehicle (e.g., GPS, geo-location), power consumption of the motor powering the header components, and fuel consumption of the vehicle. At 506, image data of the target crop (e.g., before and/or after conditioning) is acquired from a camera 550.

At 508, the image data is fed into an image processing process. The image processing 508 can comprise converting the image data to a binary image (e.g., black and white) at 510. At 512, the image data can be color enhanced to remove noise and increase contrast. Further, in some implementations at 514, the image data can be processed to identify the crimped crop, such as the extent and nature of the crimping conditioning of the crop. At 516, the binary image can be processed to identify edges and morphologic details of the target crop, for example, which can help identify a crop condition after conditioning. At 518, the color image enhanced image data can be processed further to provide for segmentation and boundary identification, which can help identify leaf shapes and sizes, and stem shapes and sizes. At 520, in some implementations, the identified crimp crop data (e.g., comprising header load 502, and other data 504, such as crop type, engine speed, header speed, vehicle speed, roll gap, position, power consumption, fuel consumption, and more) can be used to extract crop characteristics, such as seed, leaf, and stem shapes and sizes (e.g., width and height).

At 522, the edge and morphology data is processed in a multiclass decision forest, which provides for machine learning classification. A multi-class decision forest can comprise an algorithm that works by building multiple decision trees, and then voting occurs of the most popular output class. For example, voting is a form of aggregation, in which each tree in the classification decision forest outputs data (e.g., a non-normalized frequency histogram of labels), and then sums the data and normalizes the result to get the probabilities for each data label, for example, a favored result. At 524, the segmentation/boundary data is input to a feature matching model, which uses comparative analysis between the identified features of the segmentation/boundary data and known, pre-determined features, such as of a desired or known crop condition. At 526, the segmentation/boundary data is input to a deep convolutional neural network (DCNN) classifier, which is used to classify portions of the image data into known image classifications, such as identifying portions of the conditioned crop (e.g., stem crimping, leaf and/or seed density, etc.).

The results of the multi-class decision forest, along with the results of the feature matching, DCNN, and in some implementations the extracted crop characteristics, are input to a decision forest regression, at 528. The results of the decision forest regression can be used to identify a potential adjustment to the rollers. The decision forest regression model consists of an ensemble of decision trees (e.g., identified by the various classifiers), each of which outputs a Gaussian distribution as a prediction. In this example, an aggregation is performed over the ensemble of trees to find the Gaussian distribution that is closest to the combined distribution for all trees in the model. In this example, the result can be used to determine if and what needs to be adjusted in the roller assembly to obtain a desired conditioning of the target crop.

At 530, a roll gap and/or roll tension adjustment command is sent to roller actuators, described above. That is, based on the determination of the decision forest regression, an adjustment to the distance between a pair of rollers (e.g., or sets of rollers) can be adjusted to provide for an improved outcome to the crimping (e.g., more crimping, less crimping, same amount); and an adjust to an amount of tension or pressure provided by the rollers can be adjusted (e.g., more pressure, less pressure, same pressure.). Further, the decision forest regression outcome may provide for an adjustment of the roller speed differential, at 532. That is, for example, each roller in a pair (e.g., or set) of rollers may be rotating at a different speed (e.g., or the same speed of rotation), which can provide for variances in the conditioning of the target crop. In this example, the differential of the roller speed in the set of rollers can be adjusted to improve the conditioning to a desired result. Additionally, at 534, the speed of the header (e.g., ground speed, motor speed, etc.) can also be adjusted based on the results of the decision forest regression, in order to achieve a desired conditioning result. In some implementations, crop presence module can identify whether a target crop is present in real-time, at 536. That is, for example, the data collected, and processing performed on the data can be used to identify whether a target crop is present, thereby facilitating in determination of adjustment (e.g., or not).

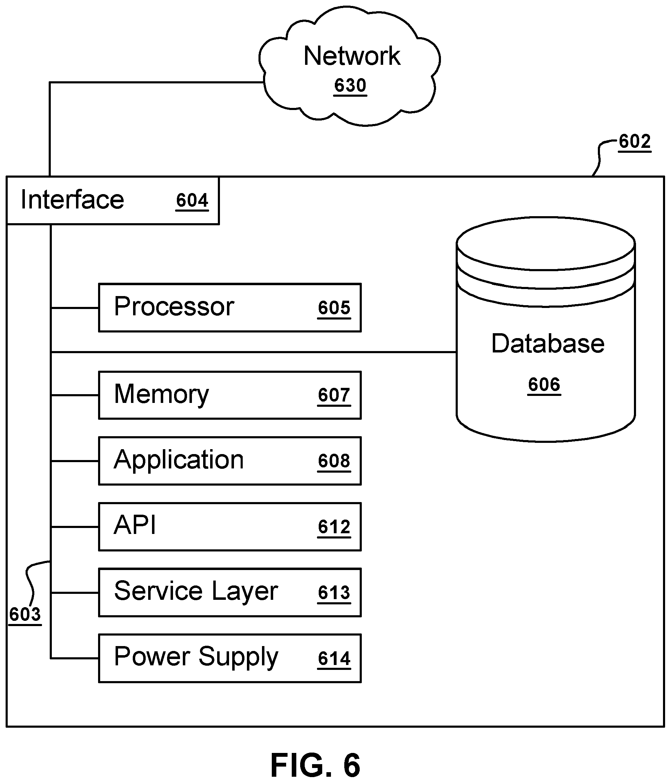

FIGURE 6 is a schematic diagram of an example computer system 600 used to provide computational functionalities associated with described algorithms, methods, functions, processes, flows, and procedures described in the present disclosure, according to some implementations of the present disclosure. The illustrated computer 602 is intended to encompass any computing device such as a server, a desktop computer, a laptop/notebook computer, a wireless data port, a smart phone, a personal data assistant (PDA), a tablet computing device, or one or more processors within these devices, including physical instances, virtual instances, or both. The computer 602 can include input devices such as keypads, keyboards, and touch screens that can accept user information. Also, the computer 602 can include output devices that can convey information associated with the operation of the computer 602. The information can include digital data, visual data, audio information, or a combination of information. The information can be presented in a graphical user interface (UI) (or GUI).

The computer 602 can serve in a role as a client, a network component, a server, a database, a persistency, or components of a computer system for performing the subject matter described in the present disclosure. The illustrated computer 602 is communicably coupled with a network 630. In some implementations, one or more components of the computer 602 can be configured to operate within different environments, including cloud-computing-based environments, local environments, global environments, and combinations of environments.

At a high level, the computer 602 is an electronic computing device operable to receive, transmit, process, store, and manage data and information associated with the described subject matter. According to some implementations, the computer 602 can also include, or be communicably coupled with, an application server, an email server, a web server, a caching server, a streaming data server, or a combination of servers.

The computer 602 can receive requests over network 630 from a client application (for example, executing on another computer 602). The computer 602 can respond to the received requests by processing the received requests using software applications. Requests can also be sent to the computer 602 from internal users (for example, from a command console), external (or third) parties, automated applications, entities, individuals, systems, and computers.

Each of the components of the computer 602 can communicate using a system bus 603. In some implementations, any or all of the components of the computer 602, including hardware or software components, can interface with each other or the interface 604 (or a combination of both), over the system bus 603. Interfaces can use an application programming interface (API) 612, a service layer 613, or a combination of the API 612 and service layer 613. The API 612 can include specifications for routines, data structures, and object classes. The API 612 can be either computer-language independent or dependent. The API 612 can refer to a complete interface, a single function, or a set of APIs.

The service layer 613 can provide software services to the computer 602 and other components (whether illustrated or not) that are communicably coupled to the computer 602. The functionality of the computer 602 can be accessible for all service consumers using this service layer. Software services, such as those provided by the service layer 613, can provide reusable, defined functionalities through a defined interface. For example, the interface can be software written in JAVA, C++, or a language providing data in extensible markup language (XML) format. While illustrated as an integrated component of the computer 602, in alternative implementations, the API 612 or the service layer 613 can be stand-alone components in relation to other components of the computer 602 and other components communicably coupled to the computer 602. Moreover, any or all parts of the API 612 or the service layer 613 can be implemented as child or sub-modules of another software module, enterprise application, or hardware module without departing from the scope of the present disclosure.

The computer 602 includes an interface 604. Although illustrated as a single interface 604 in FIGURE 6, two or more interfaces 604 can be used according to particular needs, desires, or particular implementations of the computer 602 and the described functionality. The interface 604 can be used by the computer 602 for communicating with other systems that are connected to the network 630 (whether illustrated or not) in a distributed environment. Generally, the interface 604 can include, or be implemented using, logic encoded in software or hardware (or a combination of software and hardware) operable to communicate with the network 630. More specifically, the interface 604 can include software supporting one or more communication protocols associated with communications. As such, the network 630 or the interface's hardware can be operable to communicate physical signals within and outside of the illustrated computer 602.

The computer 602 includes a processor 605. Although illustrated as a single processor 605 in FIGURE 6, two or more processors 605 can be used according to particular needs, desires, or particular implementations of the computer 602 and the described functionality. Generally, the processor 605 can execute instructions and can manipulate data to perform the operations of the computer 602, including operations using algorithms, methods, functions, processes, flows, and procedures as described in the present disclosure.

The computer 602 also includes a database 606 that can hold data for the computer 602 and other components connected to the network 630 (whether illustrated or not). For example, database 606 can be an in-memory, conventional, or a database storing data consistent with the present disclosure. In some implementations, database 606 can be a combination of two or more different database types (for example, hybrid in-memory and conventional databases) according to particular needs, desires, or particular implementations of the computer 602 and the described functionality. Although illustrated as a single database 606 in FIGURE 6, two or more databases (of the same, different, or combination of types) can be used according to particular needs, desires, or particular implementations of the computer 602 and the described functionality. While database 606 is illustrated as an internal component of the computer 602, in alternative implementations, database 606 can be external to the computer 602.

The computer 602 also includes a memory 607 that can hold data for the computer 602 or a combination of components connected to the network 630 (whether illustrated or not). Memory 607 can store any data consistent with the present disclosure. In some implementations, memory 607 can be a combination of two or more different types of memory (for example, a combination of semiconductor and magnetic storage) according to particular needs, desires, or particular implementations of the computer 602 and the described functionality. Although illustrated as a single memory 607 in FIGURE 6, two or more memories 607 (of the same, different, or combination of types) can be used according to particular needs, desires, or particular implementations of the computer 602 and the described functionality. While memory 607 is illustrated as an internal component of the computer 602, in alternative implementations, memory 607 can be external to the computer 602.

The application 608 can be an algorithmic software engine providing functionality according to particular needs, desires, or particular implementations of the computer 602 and the described functionality. For example, application 608 can serve as one or more components, modules, or applications. Further, although illustrated as a single application 608, the application 608 can be implemented as multiple applications 608 on the computer 602. In addition, although illustrated as internal to the computer 602, in alternative implementations, the application 608 can be external to the computer 602.

The computer 602 can also include a power supply 614. The power supply 614 can include a rechargeable or non-rechargeable battery that can be configured to be either user- or non-user-replaceable. In some implementations, the power supply 614 can include power-conversion and management circuits, including recharging, standby, and power management functionalities. In some implementations, the power-supply 614 can include a power plug to allow the computer 602 to be plugged into a wall socket or a power source to, for example, power the computer 602 or recharge a rechargeable battery.

There can be any number of computers 602 associated with, or external to, a computer system containing computer 602, with each computer 602 communicating over network 630. Further, the terms "client," "user," and other appropriate terminology can be used interchangeably, as appropriate, without departing from the scope of the present disclosure. Moreover, the present disclosure contemplates that many users can use one computer 602 and one user can use multiple computers 602.

Described implementations of the subject matter can include one or more features, alone or in combination.

Additionally, in some implementations, the data can be collected at regular intervals (e.g., or continually) and curated into a remote operations center, and loaded to a database with spatial and temporal indexing capabilities. As one example, the data may be analyzed as it is collected for unload begin and end signals, and then, in combination with the location and time information, and the data records, determine which product transport container (e.g., grain cart or trailer) was positioned at a location at that time given known equipment dimensions and characteristics. In this example, once a match is identified, a "Virtual Load" record may be created or extended for the equipment receiving the load that contains pre-determined load metrics and characteristics, such as weight, volume, load time, condition of the product, and much more. As an example, this collection and curation of the data can be done automatically based on the load signals, location, and time match without need for operator intervention. Further, if the target transport container, such as a cart, already contains one or more portions of another load at the time of collection, the load quality information for all of the contained, partially filled loads can be aggregated together as appropriate for the circumstances.

The word "exemplary" is used herein to mean serving as an example, instance or illustration. Any aspect or design described herein as "exemplary" is not necessarily to be construed as advantageous over other aspects or designs. Rather, use of the word exemplary is intended to present concepts in a concrete fashion. As used in this application, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Further, at least one of A and B and/or the like generally means A or B or both A and B. In addition, the articles "a" and "an" as used in this application and the appended claims may generally be construed to mean "one or more" unless specified otherwise or clear from context to be directed to a singular form.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

Also, although the disclosure has been shown and described with respect to one or more implementations, equivalent alterations and modifications will occur to others skilled in the art based upon a reading and understanding of this specification and the annexed drawings. The disclosure includes all such modifications and alterations and is limited only by the scope of the following claims. In particular regard to the various functions performed by the above described components (e.g., elements, resources, etc.), the terms used to describe such components are intended to correspond, unless otherwise indicated, to any component which performs the specified function of the described component (e.g., that is functionally equivalent), even though not structurally equivalent to the disclosed structure which performs the function in the herein illustrated exemplary implementations of the disclosure. In addition, while a particular feature of the disclosure may have been disclosed with respect to only one of several implementations, such feature may be combined with one or more other features of the other implementations as may be desired and advantageous for any given or particular application. Furthermore, to the extent that the terms "includes," "having," "has," "with," or variants thereof are used in either the detailed description or the claims, such terms are intended to be inclusive in a manner similar to the term "comprising."

The implementations have been described, hereinabove. It will be apparent to those skilled in the art that the above methods and apparatuses may incorporate changes and modifications without departing from the general scope of this invention. It is intended to include all such modifications and alterations in so far as they come within the scope of the appended claims or the equivalents thereof.

## Claims

1. A system (200) for automatically adjusting a conditioner roller assembly (252) on a windrower machine, comprising:
a sensor array (202) comprising one or more sensors (218) that collect sensor data (214) indicative of a condition of a target crop (136) in real-time;
one or more actuators (204) that adjust a distance between rollers (304) in a roller assembly (252) of a windrower implement (250) on the fly based at least on received adjustment data (216); and
a control module (206) configured to receive the sensor data and transmits the adjustment data, the control module comprising:
a computer processor (208); and
memory (210) that stores instructions (212) configured to, when processed by the computer processor (208), generate the adjustment data by determining an amount of roller adjustment that results in a predetermined conditioning for the target crop, the determined amount of roller adjustment based at least upon the sensor data.

2. The system of claim 1, the one or more actuators further configured to adjust one or more of:
a speed of one or more rollers in the roller assembly (252);
a pressure exerted by the rollers on the target crop; and
a speed of the windrower implement (250).

3. The system of claim 1 or 2, the sensor array comprising a camera (402) configured to generate image data (450) of the target crop before and/or after conditioning by the roller assembly.

4. The system according to at least one of the preceding claims, the sensor array comprising a speed sensor (218) configured to identify a speed of one or more of a speed of the rollers and a speed of the windrower implement (250).

5. The system according to at least one of the preceding claims, the sensor array comprising a pressure sensor (218) configured to identify an amount of pressure exerted by the rollers on the target crop.

6. The system according to at least one of the preceding claims, the sensor array comprising a density or volume sensor (218) configured to identify a density or volume of the target crop entering and/or exiting the windrower implement (250).

7. The system according to at least one of the preceding claims, the sensor array comprising a header load pressure sensor (218) configured to identify an amount of load applied by a motor powering the windrower implement (250), and/or a vibration sensor that detects vibration in the windrower implement (250).

8. The system according to at least one of the preceding claims, the stored instructions further configured to: perform edge detection on images generated by the sensor array to identify stems and leaves of the target crop, and to identify boundaries of stems and perform feature matching to match with the predetermined conditioning for the target crop.

9. The system according to at least one of the preceding claims, the stored instructions further configured to perform a multi-layered image classification of images generated by the sensor array based at least on deep convolutional neural network training of a classifier, and/or to utilize sensor data from a plurality of sensors in the sensor array in a decision forest regression to identify the adjustment data.

10. A method (400) for using a system (200) that automatically adjusts a conditioner roller assembly on a windrower machine, comprising:
using a sensor array (408), comprising one or more sensors, to collect sensor data (454, 452) indicative of a condition of a target crop in real-time;
using one or more actuators to adjust a distance between rollers in a roller assembly of a windrower implement (250) on the fly based at least on received adjustment data; and
using a control module (206) to receive the sensor data (450) and transmit the adjustment data, wherein the control module comprises:
a computer processor (208); and
memory that stores instructions that, when processed by the computer processor (208), generate the adjustment data by determining an amount of roller adjustment that results in a predetermined conditioning for the target crop, the determined amount of roller adjustment based at least upon the sensor data.

11. The method of claim 10, comprising using the one or more actuators to adjust to adjust one or more of:
a speed of one or more rollers in the roller assembly; and
a pressure exerted by the rollers on the target crop.

12. The method of claim 10 or 11, comprising using a camera in the sensor array to generate image data of the target crop before and/or after conditioning by the roller assembly.

13. The method according to at least one of the claims 10 to 12, comprising using a speed sensor to identify a speed of one or more of a speed of the rollers and a speed of the windrower implement (250), and/or using a header load pressure to identify an amount of load applied by a motor powering the windrower implement (250), and/or a vibration sensor that detects vibration in the windrower implement (250).

14. The method according to at least one of the claims 10 to 13, wherein processing the stored instructions results in edge detection on images generated by the sensor array to identify stems and leaves of the target crop.

15. The method according to at least one of the claims 10 to 14, wherein processing the stored instructions results in one or more of:
performance of a multi-layered image classification of images generated by the sensor array based at least on deep convolutional neural network training of a classifier; and
utilization of sensor data from a plurality of sensors in the sensor array in a decision forest regression to identify the adjustment data.
